# EUROPEAN PATENT SPECIFICATION

(11) **EP 0 981 455 B1**
(45) Date of publication and mention of the grant of the patent: **24.07.2002**
(21) Application number: 98921507.4
(22) Date of filing: 11.05.1998
(51) Int. Cl.: B60G 3/02

(54) **LIGHTING FIXTURE**
MONTAGEVORRICHTUNG FÜR BELEUCHTUNG
APPAREIL D'ECLAIRAGE

(30) Priority: 13.05.1997 FI 972042
(43) Date of publication of application: 01.03.2000
(73) Proprietor: TEKNOWARE OY, 15200 Lahti (FI)
(72) Inventor: MURTONEN, Tapio, FIN-15950 Lahti (FI)
(74) Representative: Peltonen, Antti Sakari
(86) International application number: FI9800397
(87) International publication number: WO9851520

(56) References cited:
- EP-A- 0 522 480
- WO-A-86/02138
- DE-A- 2 748 947
- US-A- 5 006 966

## Description

### BACKGROUND OF THE INVENTION

The invention relates to a lighting fixture in vehicles or in the like, the lighting fixture comprising a lighting unit and a louver containing a plurality of well-reflecting elongated light lamellas which are located substantially parallel to each other and substantially transversely in relation to the direction of the vehicle.

There are international regulations concerning interior lighting in buses, metro-carriages and railway-carriages, the regulations generally requiring 150...250 lux as the light level. The interior lighting also has to be as even as possible i.e. the contrasts have to be as small as possible.

On the other hand the driver has to be ensured with the best possible visibility onto the drive-way in all weather conditions. This means that the driver's cab has to be as dim as possible so that the driver's eyes are capable of adapting to the outdoor light level.

The arrangement of these two, the light level of a high passenger seating area and the light level of a low driver cab, is a problem in public transit vehicles. Furthermore, when the light level of the driver cab is low the passenger seating area and the lighting fixtures therein easily tend to reflect brightly onto the windshield.

The aim has been to avoid reflection by designing the lighting fixtures so that they emit light mainly widely in the cross direction at the same time as the longitudinal light distribution is as narrow as possible. The methods normally used are the use of a deep lighting fixture and a louver used in a lighting fixture hampering the direct visibility of the light source. Such a louver hampering reflection is efficient also in hampering windshield reflections, particularly if it is painted in dark tones. However, the louver simultaneously reduces the light efficiency of the lighting fixture. If the louvers are painted in light tones it, in turn, causes reflections onto the windshield.

### BRIEF DESCRIPTION OF THE INVENTION

An object of the invention is thus to develop a lighting fixture to solve said problems.

The object of the invention is achieved with a lighting fixture according to the invention characterized in that the lighting fixture further comprises poorly reflecting elongated dark lamellas, which are located parallel to the light lamellas, whereby the dark lamellas are arranged to hamper at least partly the light from reflecting into the longitudinal direction of the vehicle.

The preferred embodiments of the lighting fixture according to the invention are the object of the dependent claims 2-9.

An advantage of the lighting fixture according to the invention is that since the majority of the reflecting surfaces of the lamellas are light, or well-reflecting, the light level in the passenger seating area remains high, simultaneously as, on account of the dark lamellas, the driver of the vehicle is not dazzled. Another advantage achieved with the lighting fixture of the invention is that it is economical and easy to manufacture. A further advantage with the lighting fixture of the invention is that also old lighting fixtures already in use can be equipped with the louver of the invention.

### BRIEF DESCRIPTION OF THE DRAWINGS

In the following the invention will be described in greater detail in connection with the preferred embodiments with reference to accompanying drawings, in which
Figure 1 shows a side view and a cross-sectional view of a lighting fixture according to the invention; and
Figure 2 shows a lighting fixture according to the invention mounted into a bus.

### DETAILED DESCRIPTION OF THE INVENTION

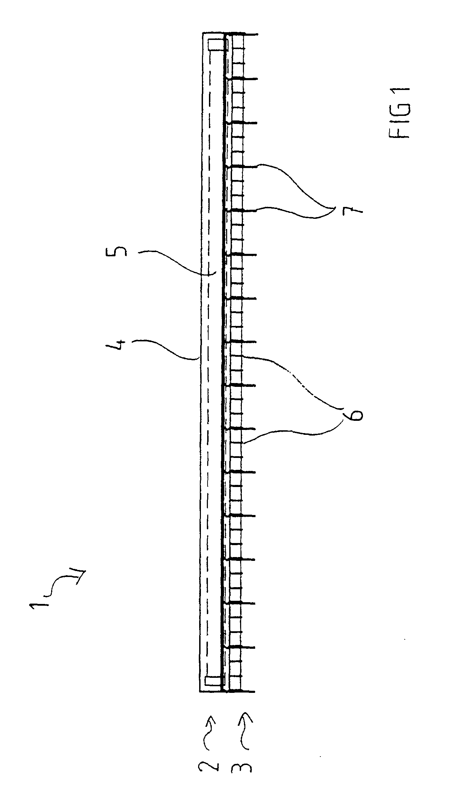

Figure 1 shows a lighting fixture 1 according to the invention comprising a lighting unit 2 and a louver 3. In the example shown in the Figure the lighting fixture 1 is elongated but the lighting fixture 1 can also be different in appearance. The lighting unit 2 of the invention has a housing 4 and a light source 5 which is preferably a fluorescent tube. In the Figure the housing 4 is trough-shaped and open on one side. The lighting fixture 1 according to the invention can naturally be different in appearance from what has been described here.

The louver 3 is attached to the lighting unit 2 so that the light emitted from the light source 5 is carried through the louver 3. In the lighting fixture 1 according to the Figure the louver 3 is attached to the housing 4 in such a manner that it closes the open side of the trough-shaped housing 4.

The louver 3 contains elongated light lamellas 6 and dark lamellas 7 which are located substantially parallel to each other. The lamellas can be made of steel, aluminium or of another material. The object of the light lamellas 6 is to reflect i.e. to distribute and direct light so that the interior lighting is as even as possible. The object of the dark lamellas 7 is to hamper the light from reflecting into the direction of the vehicle, i.e. onto the windshield or the like of the vehicle. This is based on the fact that a dark colour absorbs light but does not reflect it. The dark lamellas 7 can, though not necessarily, be more densely located at the front than the rear of the vehicle, whereby a better reflection shield is achieved.

The dark lamellas 7 can be dark either on both sides or alternatively only on one side. The louver 3 can, for example, be made such that the dark lamellas 7 are dark only when seen from the front of the vehicle and light backwards, whereby the light level in the passenger seating area is higher. By making the lamellas 7 dark on both sides the passengers are not subjected to glare, i.e. the light is hampered from reflecting into the rear of the vehicle. It is important in this connection that the dark lamellas 7 are dark at least when seen from the front of the vehicle, whereby they hamper the light from reflecting into the direction of the vehicle, for example onto the windshield.

The dark lamellas 7 are measured in such a manner that they hamper the light from reflecting into the direction of the vehicle, or onto the windshield or the like. The dark lamellas 7 are measured case-specifically and e.g. the height of the lighting fixture 1, the level of the driver's eyesight, the horizontal distance of the windshield from the lighting fixture 1, the distance of the driver from the windshield and the position/tilt angle of the windshield affect the measuring. One way of measuring is to make the dark lamellas 7 larger than the light lamellas 6, preferably so that they are vertically higher than the light lamellas 6. Another alternative is to make the dark lamellas 7 such that they extend farther, preferably vertically, from the lighting unit 2 than the light lamellas 6, thus hampering the light from reflecting onto the direction of the vehicle. A third alternative is to place the dark lamellas 7 farther, preferably vertically, from the lighting unit 2 than the light lamellas 6. In said second and third alternatives the dark lamellas 7 can also, though not necessarily, be larger than the light lamellas 6.

In order for the international light level regulations for interior lighting to be met, the lighting fixture 1 according to the invention is made such that the majority of the lamellas are light lamellas 6.

The louver 3 can preferably be manufactured in such a manner that first a one-part louver 3 comprising only light lamellas 6 is manufactured, for example, from steel plate utilizing punching technique. The dark lamellas 7 are manufactured as separate parts which are attached to the louver 3 comprising only light lamellas 6. Thus, the dark lamellas 7 can preferably be measured case-specifically.

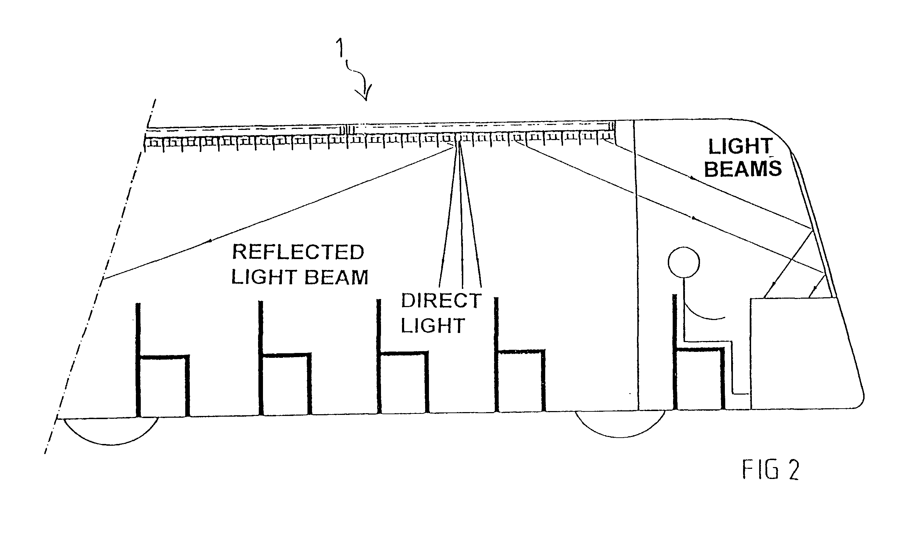

Figure 2 shows a number of lighting fixtures 1 according to the invention mounted into the ceiling of a bus. The lighting fixtures 1 are attached so that the lamellas are located substantially transversely in relation to the direction of the bus. The lighting fixtures are located in a line extending from the front to the rear in the middle of the bus. The Figure further shows the direction of light rays in various parts of the bus when the lighting fixture 1 according to the invention is being used.

The invention can be applied to both new lighting fixtures and old lighting fixtures already in use. The old lighting fixtures can preferably be equipped with the louver 3 which is a part of the lighting fixture 1 according to the invention.

It is obvious to one skilled in the art that as technology advances the basic idea of the invention can be implemented in various ways. The invention and the preferred embodiments of the invention are thus not restricted to the examples described above but can vary within the scope of the claims.

## Claims

1. A lighting fixture in vehicles or in the like, the lighting fixture (1) comprising a lighting unit (2), and
a louver (3) containing a plurality of well-reflecting, elongated light lamellas (6) which are located substantially parallel to each other and substantially transversely in relation to the longitudinal direction of the vehicle,
**characterized in that** the lighting fixture further comprises
poorly reflecting, elongated dark lamellas (7) which are located parallel to the light lamellas (6),
whereby the dark lamellas (7) are arranged to hamper at least partly the light from reflecting into the direction of the vehicle.

2. A lighting fixture as claimed in claim 1, **characterized in that** the dark lamellas (7) are larger than the light lamellas (6).

3. A lighting fixture as claimed in claim 1, **characterized in that** the dark lamellas (7) extend farther from the lighting unit (2) than the light lamellas (6).

4. A lighting fixture as claimed in claim 3, **characterized in that** the dark lamellas (7) extend farther vertically from the lighting unit (2) than the light lamellas (6).

5. A lighting fixture as claimed in claim 1, **characterized in that** the dark lamellas (7) are placed farther from the lighting unit (2) than the light lamellas (6).

6. A lighting fixture as claimed in claim 5, **characterized in that** the dark lamellas (7) are placed vertically farther from the lighting unit (2) than the light lamellas (6).

7. A lighting fixture as claimed in any one of the claims 1-6, **characterized in that** the dark lamellas (7) are dark only on one side.

8. A lighting fixture as claimed in claim 7, **characterized in that** the dark lamellas (7) are dark only when seen from the front of the vehicle.

9. A lighting fixture as claimed in any one of the claims 1-8, **characterized in that** the majority of the lamellas (6, 7) are light lamellas (6).

## Patentansprüche

1. Beleuchtungskörper in Fahrzeugen oder ähnlichem, der Beleuchtungskörper (1) umfassend eine Beleuchtungseinheit (2), und
eine Rasterblende (3), die eine Vielzahl von gut reflektierenden, länglichen hellen Lamellen (6) umfaßt, die im wesentlichen parallel zueinander und im wesentlichen quer zur Längsrichtung des Fahrzeugs angeordnet sind,
**dadurch gekennzeichnet, daß** der Beleuchtungskörper weiter umfaßt
schlecht reflektierende, längliche dunkle Lamellen (7), die parallel zu den hellen Lamellen (6) angeordnet sind,
wobei die dunklen Lamellen (7) so angeordnet sind, daß sie zumindest teilweise eine Reflexion des Lichts in Richtung des Fahrzeugs behindern.

2. Beleuchtungskörper nach Anspruch 1, **dadurch gekennzeichnet, daß** die dunklen Lamellen (7) größer sind als die hellen Lamellen (6).

3. Beleuchtungskörper nach Anspruch 1, **dadurch gekennzeichnet, daß** sich die dunklen Lamellen (7) weiter von der Beleuchtungseinheit (2) erstrecken als die hellen Lamellen (6).

4. Beleuchtungskörper nach Anspruch 3, **dadurch gekennzeichnet, daß** sich die dunklen Lamellen (7) in vertikaler Richtung weiter von der Beleuchtungseinheit (2) erstrecken als die hellen Lamellen (6).

5. Beleuchtungskörper nach Anspruch 1, **dadurch gekennzeichnet, daß** die dunklen Lamellen (7) weiter von der Beleuchtungseinheit (2) entfernt angeordnet sind als die hellen Lamellen (6).

6. Beleuchtungskörper nach Anspruch 5, **dadurch gekennzeichnet, daß** die dunklen Lamellen (7) in vertikaler Richtung weiter von der Beleuchtungseinheit (2) entfernt angeordnet sind als die hellen Lamellen (6).

7. Beleuchtungskörper nach einem der Ansprüche 1 bis 6, **dadurch gekennzeichnet, daß** die dunklen Lamellen (7) nur auf einer Seite dunkel sind.

8. Beleuchtungskörper nach Anspruch 7, **dadurch gekennzeichnet, daß** die dunklen Lamellen (7) nur auf der zum vorderen Teil des Fahrzeugs weisenden Seite dunkel sind.

9. Beleuchtungskörper nach einem der Ansprüche 1 bis 8, **dadurch gekennzeichnet, daß** die Mehrzahl der Lamellen (6, 7) helle Lamellen (6) sind.

## Revendications

1. Dispositif d'éclairage des véhicules ou analogue, le dispositif d'éclairage (1) comportant une unité d'éclairage (2), et une grille (3) comportant une pluralité de lamelles lumineuses allongées très réfléchissantes (6), qui sont positionnées sensiblement parallèlement les unes aux autres, et sensiblement transversalement par rapport à la direction longitudinale du véhicule,
**caractérisé en ce que** le dispositif d'éclairage comporte de plus des lamelles sombres allongées peu réfléchissantes (7) qui sont positionnées parallèlement aux lamelles lumineuses (6), de sorte que les lamelles sombres (7) sont agencées pour empêcher au moins partiellement la lumière de se réfléchir dans la direction du véhicule.

2. Dispositif d'éclairage selon la revendication 1, **caractérisé en ce que** les lamelles sombres (7) sont plus grandes que les lamelles lumineuses (6).

3. Dispositif d'éclairage selon la revendication 1, **caractérisé en ce que** les lamelles sombres (7) s'étendent plus loin à partir de l'unité d'éclairage (2) que les lamelles lumineuses (6).

4. Dispositif d'éclairage selon la revendication 3, **caractérisé en ce que** les lamelles sombres (7) s'étendent plus loin verticalement à partir de l'unité d'éclairage (2) que les lamelles lumineuses (6).

5. Dispositif d'éclairage selon la revendication 1, **caractérisé en ce que** les lamelles sombres (7) sont positionnées plus loin de l'unité d'éclairage (2) que les lamelles lumineuses (6).

6. Dispositif d'éclairage selon la revendication 5, **caractérisé en ce que** les lamelles sombres (7) sont positionnées plus loin verticalement de l'unité d'éclairage (2) que les lamelles lumineuses (6).

7. Dispositif d'éclairage selon l'une quelconque des revendications 1 à 6, **caractérisé en ce que** les lamelles sombres (7) sont sombres sur un seul côté.

8. Dispositif d'éclairage selon la revendication 7, **caractérisé en ce que** les lamelles sombres (7) sont sombres seulement lorsqu'elles sont vues à partir de l'avant du véhicule.

9. Dispositif d'éclairage selon l'une quelconque des revendications 1 à 8, **caractérisé en ce que** la majorité des lamelles (6, 7) sont des lamelles lumineuses (6).
